# EUROPÄISCHE PATENTANMELDUNG

(11) **EP 1 164 373 A2**
(43) Veröffentlichungstag der Anmeldung: **19.12.2001**
(21) Anmeldenummer: 01112760.2
(22) Anmeldetag: 26.05.2001
(51) Int. Cl.: G01N 30/56

(54) **Verfahren zum Entpacken von Chromatographiesäulen und dafür geeignete Vorrichtung**

(30) Priorität: 14.06.2000 DE 10029142
(71) Anmelder: InfraServ GmbH & Co. Höchst KG, 65926 Frankfurt am Main (DE)
(72) Erfinder: Simon, Klaus Jürgen, 65779 Kelkheim (DE); Itter, Klaus, 61184 Karben (DE)
(74) Vertreter: Ackermann, Joachim, Dr.

(57) **Zusammenfassung**

Beschrieben wird ein Verfahren zum Entpacken von gefüllten Chromatographiesäulen, die einen zylindrischen Säulenkörper, einen Boden, einen in Richtung der Zylinderlängsachse beweglichen, den zylindrischen Säulenkörper nach oben abdichtenden Deckel und eine im zylindrischen Säulenkörper angebrachte Auslaßvorrichtung für das Füllgut aufweisen und deren zylindrischer Säulenkörper um eine senkrecht zur Zylinderlängsachse verlaufende Achse drehbar gelagert ist.

Das Verfahren läßt sich einfach handhaben und gestattet eine Automatisierung des Entpackungsvorganges, insbesondere bei großen Säulen.

## Beschreibung

Die Erfindung betrifft ein Verfahren zum Entpacken von Chromatographiesäulen- nachstehend Säulen genannt - sowie eine dafür geeignete Vorrichtung.

Säulen werden häufig mit Chromatographiemedium befüllt (nachstehend Füllgut genannt), das eine feste Packung bildet und nach der Durchführung der Chromatographie nur schwierig und aufwendig zu entfernen ist. Häufig müssen derartige Säulen manuell ausgetragen und anschließend mit Waschflüssigkeit gespült werden. Bei Anwendungen in der pharmazeutischen Industrie müssen diese Säulen üblicherweise noch desinfiziert werden. Alle diese Schritte sind zeit- und kostenaufwendig. Es hat daher nicht an Versuchen gefehlt, Teile dieser Verfahrensschritt zu automatisieren.

Aus der SE-A-9801433 ist eine Chromatographiesäule mit mindestens einem zentralen Aufschlämmventil bekannt, das an der Oberzellvorrichtung und/oder an der Bodenzellvorrichtung positioniert ist. Das zentrale Aufschlämmventil besitzt eine pneumatisch bediente Ventilhülse, die sich verschieben kann, um drei unterschiedliche Strömungsformen zu erzeugen. Eine der Strömungsformen erlaubt ein Wiederaufschlämmen und ein Entfernen von Chromatograhiemedium (Packungsmaterial, Gel) aus der Säule sowie ein nachfolgendes erneutes Füllen der Säule mit frischem Gel ohne jedwede Demontage. Das Aufschlämmen des Gels ist erforderlich, um die Säule wieder mit frischem oder anderem Gel, das für bestimmte Anwendungen spezifisch ist, zu beladen. Die bekannte Säule hat jedoch den Nachteil, daß bei Säulendurchmessern D ab 500 mm das Aufschlämmventil nicht über die gesamte Querschnittsfläche der Säule wirkt. Insbesondere bei Säulen ab Durchmessern von 600 mm und'eine Säulenbettvolumen von mehr als ca. 500 I muß das Gel manuell mittels Paddel aufgeschlämmt werden, was einen erheblichen Arbeits- und Kostenaufwand verursacht.

Um die Zylinderlängsachse drehbar gelagerte Säulen sind aus der DE-C-199 03 255 bekannt.

Vor diesem Stand der Technik lag der Erfindung die Aufgabe zugrunde, eine Säule bereitzustellen, die mit wenig Aufwand entladen werden kann, wobei diese Schritte vorzugsweise automatisiert werden können.

Diese Aufgabe wird erfindungsgemäß durch eine Säule der eingangs genannten Art und durch die Verwendung einer derartigen Säule gelöst.

Die Erfindung betrifft ein Verfahren zum Entpacken von gefüllten Chromatographiesäulen, die einen zylindrischen Säulenkörper, einen Boden, einen in Richtung der Zylinderlängsachse beweglichen, den zylindrischen Säulenkörper nach oben abdichtenden Deckel und eine im zylindrischen Säulenkörper angebrachte Auslaßvorrichtung für das Füllgut aufweisen und deren zylindrischer Säulenkörper um eine senkrecht zur Zylinderlängsachse verlaufende Achse drehbar gelagert ist, umfassend die Maßnahmen:
a) Bewegung des beweglichen, den zylindrischen Säulenkörper nach oben abdichtenden Deckels um eine derartige Strecke, so dass zwischen der Oberfläche des Füllguts und der Innenseite des Deckels ein Zwischenraum entsteht, der Deckel aber weiterhin den zylindrischen Säulenkörper abdichtet,
b) Drehen der Chromatographiesäule um die senkrecht zur Zylinderlängsachse verlaufende Achse um einen derartigen Winkel, daß die in dem zylindrischen Säulenkörper angebrachte Auslaßvorrichtung den tiefsten Punkt erreicht und eine Auslaßposition einnimmt,
c) Aufschlämmen des Füllguts durch Eindüsen einer Flüssigkeit in den Zwischenraum, der durch die Bewegung nach Schritt a) zwischen der Innenseite des Deckels und der Oberfläche des Füllguts entstanden ist, und
d) Austragen des aufgeschlämmten Füllguts durch die Auslaßvorrichtung.

Ferner betrifft die Erfindung eine Vorrichtung zur Durchführung des oben beschriebenen Verfahrens umfassend einen zylindrischen Säulenkörper, einen Boden, einen in Richtung der Zylinderlängsachse beweglichen, den zylindrischen Säulenkörper nach oben abdichtenden Deckel, eine im zylindrischen Säulenkörper angebrachte Auslaßvorrichtung für das Füllgut und Aufschlämmeinheiten, die Flüssigkeit auf die Oberfläche des Füllguts eindüsen können, wobei der zylindrische Säulenkörper um eine senkrecht zur Zylinderlängsachse verlaufende Achse drehbar gelagert ist.

In einer bevorzugten Ausgestaltung des erfindungsgemäßen Verfahrens wird ein Deckel eingesetzt, der eine Metallplatte und eine damit verbundene weitere Platte auf der dem Füllgut zugewandten Seite, beispielsweise aus Metall oder aus elastischem Material, beispielsweise Kunststoff, aufweist oder der eine Metallplatte aufweist, die auf der dem Füllgut zugewandten Seite mit elastischem Material, beispielsweise Kunststoff, beschichtet ist. Die weitere Platte ist vorzugsweise als Verteilerplatte ausgestaltet, über die Flüssigkeit auf die Oberfläche des Füllguts eingedüst wird. Die Beschichtung oder die weitere Platte bedecken vorzugsweise den gesamten Querschnitt der Metallplatte.

Sowohl Metallplatte als auch weitere Platte dichten den Säuleninnenraum nach oben ab. Beide Platten sind in Richtung der Zylinderlängsachse beweglich ausgestaltet und können zur Ausbildung eines Zwischenraums in Richtung der Zylinderlängsachse bewegt werden.

Während des Chromatographiebetriebs befindet sich die Metallplatte bzw. die weitere Platte in direktem Kontakt mit dem Füllgut. Das aufzutrennende Material wird über nicht gezeigte Zuführungen, die sich im Deckel befinden, auf die Oberfläche des Füllguts gegeben und durchläuft das Füllgut in Richtung Boden.

Nach der Durchführung des Chromatographiebetriebs wird der Deckel in Richtung der Zylinderlängsachse bewegt, so daß sich zwischen Deckel und Oberfläche des Füllguts ein Zwischenraum ausbildet. Dabei wird der Deckel nur soweit angehoben, daß dieser die Chromatographiesäule immer noch abdichtet.

In diesen Zwischenraum wird nun eine Flüssigkeit, beispielsweise Wasser, eingedüst, um das Füllgut aufzulockern und das Austragen zu erleichtern.

Zum Austragen des Füllguts wird die Säule um die senkrecht zur Zylinderlängsachse verlaufende Achse um einen derartigen Winkel gedreht, daß die in dem zylindrischen Säulenkörper angebrachte Auslaßvorrichtung, beispielsweise ein Kugelhahn, den tiefsten Punkt erreicht und eine Auslaßposition einnimmt.

Dieses Drehen der Säule kann vor der Bewegung des Deckels zur Ausbildung des Zwischenraums erfolgen oder vor dem ersten Eindüsen der Flüssigkeit in den Zwischenraum. Vorzugsweise erfolgt das Drehen der Säule vor der Bewegung des Deckels und vor dem ersten Eindüsen der Flüssigkeit.

Nachdem die Säule in Austragsposition gedreht worden ist, wird die Auslaßvorrichtung geöffnet und die Flüssigkeit in den Zwischenraum eingedüst. Die Flüssigkeit bewirkt eine Auflockerung des festgepackten Füllguts und ein mechanisches Auflockern der Packung. Somit wird der Austrag des Füllguts aus der Säule überhaupt erst möglich. Ferner bewirkt die Flüssigkeit gleichzeitig ein Spülen des Säuleninnenraums, so daß die Säule nach dem Entleeren sogleich für einen neuen Arbeitsgang zur Verfügung steht.

Die Flüssigkeit kann durch in Höhe des Zwischenraums im Säulenkörper angebrachte Zuführungen eingedüst werden. Bevorzugt erfolgt das Aufschlämmen des Füllguts nach Schritt c) durch das Eindüsen einer Flüssigkeit, die durch mehrere im Deckel angebrachte Aufschlämmeinheiten in den Zwischenraum zugeführt wird.

Besonders bevorzugt wird die Flüssigkeit durch mindestens zwei Aufschlämmeinheiten am Deckel eingedüst, die in einem Abstand von mindestens D/6 zur Zylinderlängsachse angeordnet sind.

Ganz besonders bevorzugt wird die Flüssigkeit durch mindestens vier Aufschlämmeinheiten am Deckel eingedüst, die in einem Abstand von etwa D/4 symmetrisch um die Zylinderlängsachse angeordnet sind.

In einer weiteren bevorzugten Ausführungsform weist die Säule einen beweglichen, den zylindrischen Säulenkörper nach unten abdichtenden Boden auf.

Das erfindungsgemäße Verfahren umfaßt in diesem Fall zusätzlich die Maßnahmen:
a1) Bewegung des beweglichen, den zylindrischen Säulenkörper nach unten abdichtenden Bodens um eine derartige Strecke, so dass zwischen der Unterseite des Füllguts und der Innenseite des Bodens ein Zwischenraum entsteht, der Boden aber weiterhin den zylindrischen Säulenkörper abdichtet, und
e1) Aufschlämmen des Füllguts durch Eindüsen einer Flüssigkeit in den Zwischenraum, der durch die Bewegung nach Schritt a1) zwischen der Innenseite des Bodens und der Unterseite des Füllguts entstanden ist.

Ebenfalls bevorzugt weist die erfindungsgemäße Vorrichtung neben oder mit den Aufschlämmeinheiten zusätzlich Rührorgane für das Füllgut auf. Dabei handelt es sich insbesondere um Blattrührer oder Propellerrührer oder Schnecken oder Schälmesser als Rührmittel.

Vorteilhafterweise sind mindestens 4 Aufschlämmeinheiten in einem Abstand von etwa D/4 bzw. unter praktischen Umständen von D/4 symmetrisch oder in gleichem Winkelabstand um die Zylinderachse angeordnet. Die Aufschlämmeinheiten können teils als Düsen oder teils als Rührorgane ausgebildet sein, wobei die Rührorgane Blattrührer oder Propellerrührer oder Balkenrührer oder Schnecken oder Schälmesser als Rührmittel aufweisen können. In einer besonderen Ausgestaltung sind die Aufschlämmeinheiten als zylindrische Düsen mit Düsenlöchern in den Deckel eingesetzt, wobei die Düsenlöcher mehrheitlich in die Mantelfläche der oder jeder Düse eingearbeitet sind. Vorzugsweise sind die Aufschlämmeinheiten parallel zur Zylinderachse verschiebbar, beispielsweise hydraulisch, pneumatisch, mechanisch oder elektromechanisch, vorzugsweise mittels Mikroprozessor ansteuerbar.

In einer besonders bevorzugten Ausgestaltung sind die Aufschlämmeinheiten und/oder die Betätigungsmittel elektrisch ansteuerbar und mit einer programmierbaren Steuereinheit verbunden, so daß die Bedienung vollautomatisch und mit vorwählbaren Einstellungen betreffend z. B. Intensität und Dauer des Aufschlämmvorganges durchgeführt werden kann.

Der Vorteil der erfindungsgemäßen Säule und des erfindungsgemäßen Verfahrens ist insbesondere darin zu sehen, daß das manuelle, arbeits- und daher kostenintensive Aufschlämmen beim Entpacken von Säulen mit großen Durchmessern, beispielsweise von mehr als 600 mm und einem (Gel-) Bettvolumen von mehr als 500 I entfallen kann.

## Patentansprüche

1. Verfahren zum Entpacken von gefüllten Chromatographiesäulen, die einen zylindrischen Säulenkörper, einen Boden, einen in Richtung der Zylinderlängsachse beweglichen, den zylindrischen Säulenkörper nach oben abdichtenden Deckel und eine im zylindrischen Säulenkörper angebrachte Auslaßvorrichtung für das Füllgut aufweisen und deren zylindrischer Säulenkörper um eine senkrecht zur Zylinderlängsachse verlaufende Achse drehbar gelagert ist, umfassend die Maßnahmen:
(a) Bewegung des beweglichen, den zylindrischen Säulenkörper nach oben abdichtenden Deckels um eine derartige Strecke, so dass zwischen der Oberfläche des Füllguts und der Innenseite des Deckels ein Zwischenraum entsteht, der Deckel aber weiterhin den zylindrischen Säulenkörper abdichtet,
(b) Drehen der Chromatographiesäule um die senkrecht zur Zylinderlängsachse verlaufende Achse um einen derartigen Winkel, daß die in dem zylindrischen Säulenkörper angebrachte Auslaßvorrichtung den tiefsten Punkt erreicht und eine Auslaßposition einnimmt,
(c) Aufschlämmen des Füllguts durch Eindüsen einer Flüssigkeit in den Zwischenraum, der durch die Bewegung nach Schritt a) zwischen der Innenseite des Deckels und der Oberfläche des Füllguts entstanden ist, und
(d) Austragen des aufgeschlämmten Füllguts durch die Auslaßvorrichtung.

2. Verfahren nach Anspruch 2, **dadurch gekennzeichnet, daß** ein Deckel eingesetzt wird, der eine Metallplatte und eine damit verbundene weitere Platte auf der dem Füllgut zugewandten Seite, insbesondere aus Metall oder aus elastischem Material, aufweist oder der eine Metallplatte aufweist, die auf der dem Füllgut zugewandten Seite mit elastischem Material beschichtet ist.

3. Verfahren nach Anspruch 1, **dadurch gekennzeichnet, daß** das Aufschlämmen des Füllguts nach Schritt c) durch das Eindüsen einer Flüssigkeit erfolgt, die durch mehrere im Deckel angebrachte Aufschlämmeinheiten in den Zwischenraum zugeführt wird.

4. Verfahren nach Anspruch 3, **dadurch gekennzeichnet, daß** das Eindüsen einer Flüssigkeit durch mindestens zwei Aufschlämmeinheiten am Deckel erfolgt, die in einem Abstand von mindestens D/6 zur Zylinderlängsachse angeordnet sind.

5. Verfahren nach Anspruch 4, **dadurch gekennzeichnet, daß** das Eindüsen einer Flüssigkeit durch mindestens vier Aufschlämmeinheiten am Deckel erfolgt, die in einem Abstand von etwa D/4 symmetrisch um die Zylinderlängsachse angeordnet sind.

6. Verfahren nach Anspruch 1, **dadurch gekennzeichnet, daß** die Chromatographiesäule einen beweglichen, den zylindrischen Säulenkörper nach unten abdichtenden Boden aufweist, und umfassend zusätzlich die Maßnahmen:
a1) Bewegung des beweglichen, den zylindrischen Säulenkörper nach unten abdichtenden Bodens um eine derartige Strecke, so dass zwischen der Unterseite des Füllguts und der Innenseite des Bodens ein Zwischenraum entsteht, der Boden aber weiterhin den zylindrischen Säulenkörper abdichtet, und
e1) Aufschlämmen des Füllguts durch Eindüsen einer Flüssigkeit in den Zwischenraum, der durch die Bewegung nach Schritt a1) zwischen der Innenseite des Bodens und der Unterseite des Füllguts entstanden ist.

7. Vorrichtung zur Durchführung des Verfahrens nach Anspruch 1 umfassend einen zylindrischen Säulenkörper, einen Boden, einen in Richtung der Zylinderlängsachse beweglichen, den zylindrischen Säulenkörper nach oben abdichtenden Deckel, eine im zylindrischen Säulenkörper angebrachte Auslaßöffnung für das Füllgut und Aufschlämmeinheiten, die Flüssigkeit auf die Oberfläche des Füllguts eindüsen können, wobei der zylindrische Säulenkörper um eine senkrecht zur Zylinderlängsachse verlaufende Achse drehbar gelagert ist.

8. Vorrichtung nach Anspruch 7, **dadurch gekennzeichnet, daß** der Boden in Richtung der Zylinderlängsachse beweglich ist.

9. Vorrichtung nach Anspruch 7, **dadurch gekennzeichnet, daß** der Deckel eine Metallplatte ist und eine damit verbundene weitere Platte auf der dem Füllgut zugewandten Seite, insbesondere aus Metall oder aus elastischem Material, aufweist oder eine Metallplatte ist, die auf der dem Füllgut zugewandten Seite mit elastischem Material beschichtet ist.

10. Vorrichtung nach Anspruch 9, **dadurch gekennzeichnet, daß** die Beschichtung oder die weitere Platte den gesamten Querschnitt der Metallplatte bedeckt.

11. Vorrichtung nach Anspruch 9, **dadurch gekennzeichnet, daß** die weitere Platte als Verteilerplatte ausgestaltet ist, über die Flüssigkeit auf die Oberfläche des Füllguts eingedüst wird.

12. Vorrichtung nach Anspruch 7, **dadurch gekennzeichnet, daß** neben den Aufschlämmeinheiten zusätzlich Rührorgane für das Füllgut vorgesehen sind.

13. Vorrichtung nach Anspruch 10, **dadurch gekennzeichnet, daß** die Rührorgane Blattrührer oder Propellerrührer oder Schnecken oder Schälmesser als Rührmittel aufweisen.
